# EUROPEAN PATENT APPLICATION

(11) **EP 2 259 573 A2**
(43) Date of publication of application: **08.12.2010**
(21) Application number: 10178504.6
(22) Date of filing: 28.04.2005
(51) Int. Cl.: H04N 5/232

(54) **Digital Camera**

(30) Priority: 07.05.2004 JP 2004137960; 07.05.2004 JP 2004137961
(62) Divisional of application: 05252664.7
(71) Applicant: Nikon Corporation, Tokyo 100-8331 (JP)
(72) Inventor: Nozaki, Hirotake, Tokyo 100-8331 (JP); Motoki, Yasuyuki, Tokyo 100-8331 (JP); Hibino, Hideo, Tokyo 100-8331 (JP); Ohta, Tadashi, Tokyo 140-8601 (JP)
(74) Representative: Petzold, Silke

(57) **Abstract**

The present invention aims at providing a digital camera that enables to readily check a focus status of a principle subject by employing a new action sequence. The present invention includes a display device that displays image data, an extraction device that extracts a feature portion of a subject from image data, and a controller that controls so as to cut out a screen having a predetermined range including at least a part of a subject corresponding to the feature portion extracted by the extraction device from the image data and display a cut-out screen in a predetermined location on the display device and an area around the extracted subject is displayed separately in a part on the display screen by a small-sized screen. Furthermore, this feature portion is set as the AF area, so that a check of a focus status becomes easy.

## Description

### INCORPOLATION BY REFERENCE

This application is based upon and claims priority of Japanese Patent Applications No.2004-137960 filed on May 7th, 2004, No.2004-137961 filed on May 7th, 2004, the contents being incorporated herein by reference.

### BACKGROUND OF THE INVENTION

### 1. Field of the Invention

The present invention relates to a digital camera that can store a shot image data onto a folder in accordance with the identification result in conjunction with identification of a person's feature point and checking of a focus status corresponding to the identification result.

### 2. Description of Related Art

Generally, to begin with a system verifying a person by checking it against a feature point registered in advance such as the fingerprint or iris, technologies that identify a person from image data have been known so far. Japanese Laid-Open Patent Application H9-251534 describes in detail an identification method of verifying identity by extracting and storing an eye, nose and mouth as a feature point, and then comparing the stored feature point with a feature point extracted from input image data and Japanese Laid-Open Patent Application H10-232934 discloses a way of enhancing an accuracy of an image database dictionary when storing such the extracted feature point. Some of examples in which these technologies have been applied to a camera will be given hereunder.

Japanese Laid-Open Patent Application 2001-309225 disclosed a camera in which data such as a face coordinate, face dimension, a position of an eye, a direction of a head and the like recognized by a face recognition algorithm is stored on an image memory along with image data. Japanese Laid-Open Patent Application 2002-232761 also discloses an image storage apparatus that stores a photographed image by linking the photographed image to information on identification about a subject having been read in advance. Japanese Laid-Open Patent Application 2002-333652 discloses an imaging apparatus that compares stored-in advance profile information with photographed face information and generates a storage signal. This profile information is stored together with a priority order.

Also, technologies of digital cameras that enable to check out a focus status of a shot screen by displaying this screen in addition to a regular screen have been disclosed, too. Japanese Laid-Open Patent Application H11-341331 discloses an electric imaging apparatus that displays a subject selected manually by way of a cursor at a manual focus on an overall screen as an enlarged motion image. At this moment, a small screen used for adjusting an angle of view is displayed simultaneously. Japanese Laid-Open Patent Application 2003-189136 discloses a camera that displays a particular location input by way of an eye and a signal of instructing a direction at a manual focus by zooming in the location. In Japanese Laid-Open Patent Application 20003-241073, it disclosed a camera in which data of a subject in the central position has been stored in advance and that detects, and focuses on a part similar to the data of the subject in the central position when focusing. This focused subject is displayed on the overall screen by an enlargement. Moreover, it is used for checking a focus status after shooting, too. Furthermore, technologies of digital cameras wherein storing of shot image data by grouping the image data into a predetermined group at a time of storing enables a search at a time of playing back to be easy have been disclosed. Japanese Laid-Open Patent Application 20002-211049 discloses an image processing apparatus that manages shot image data related to each other collectively by grouping the image data according to a shooting time. Japanese Laid-Open Patent Application 20003-162709 discloses an image processing apparatus that creates a new folder responsive to a change in a status brought about by a user operation of an imaging apparatus. Japanese Laid-Open Patent Application 20003-189215 discloses a storage apparatus that enables to link a shot storage mode to a folder managing a shot image. Japanese Laid-Open Patent Application 20003-338999 discloses an image filing apparatus that group image data by adding information on link to the image data.

### SUMMARY OF THE INVENTION

The various inventions that apply technologies identifying a subject to a camera make technologies employed in the large computer just workable even in a camera alone. But, on the other hand, when a picture is actually photographed with a camera using a technology of identifying a subject, an unprecedented action sequence as a digital camera becomes needed. Furthermore, there has been no technology disclosing that the technology of identifying a subject is applied to a check of a focus status in an actual digital camera, and there has been no technology disclosing the technology of identifying a subject with link of the technology thereof to a method of a folder creation used for storing shot image data.

With adoption of an all-new action sequence used for identifying a subject and creating a folder, a present invention aims at providing a digital camera that enables to check a focus status of a principle subject readily and realize an ease-of-use search at a time of playing back by storing shot image data onto a folder in accordance with the principle.

In order to solve the foregoing problem, an invention set forth in claim 1 includes a display device that displays image data, an extraction device that extracts a feature portion of a subject from image data, and a controller that controls so as to cut out a screen of a predetermined range including at least a part of a subject corresponding to a feature portion extracted by the extraction device from the image data and display a screen in a predetermined location on the display device. Namely, an area around an extracted subject is separately displayed in a part of a display screen by a small screen size. It may be displayed just before a d after the shooting and may be a reproduction image, too. The digital camera set forth in claim 2 further includes an imaging device that photographs a subject image, wherein the controller controls so as to superimpose a screen having the predetermined range on a screen having a full angle of view output from the imaging device and display superimposed screens on the display device. Thus, the part of the full screen is superimposed on the full screen of the image data and the superimposed screens are displayed.

The digital camera set forth in claim 3 further includes an AF device that computes a distance up to a subject within a predetermined AF area, and a setting device that set a predetermined range including at least a part of a subject corresponding to a feature portion extracted by the extraction device to the AF area. With this, a focus status of the part of the screen can be checked. The digital camera set forth in claim 4 further includes a select ing device that selects a predetermined feature portion from feature portions extracted by the extraction device, wherein the controller controls so as to display a screen having a predetermined range including a subject corresponding to a feature portion selected by the selecting device. This enables a manual selection from a plurality of extracted feature points by way of a user operation or an automatic selection from a plurality of extracted feature points based upon a predetermined standard. The digital camera set forth in claim 5 further includes a zoom device that zooms in a subject corresponding to a feature portion selected by the selecting device.

A digital camera set forth in claim 6 includes an imaging device that photographs a subject image, a display device that displays image data, an extraction device that extracts a feature portion of a subject from image data, a shooting directive device that directs the imaging device to start a shooting in order to store data of the subject image on a storage medium, and a controller that controls so as to cut out a screen having a predetermined range including at least a part of a subject corresponding to a feature portion extracted by the extraction device from the image data photographed by the imaging device responsive to a shooting directive of the shooting directive device and display a cut-out screen in a predetermined location on the display. Namely, the area around the extracted subject is displayed in a part of the display screen by the small screen after shooting the subject.

The digital camera set forth in claim 7 further includes a storage device that stores at least any of a location of a feature portion extracted by the extraction device right before the shooting directive device directs to shoot or a size thereof, and a decision device that decides the predetermined range based upon at least any of a location of the feature portion stored on the storage device or a size thereof. Namely, the range of displaying the small screen after the shooting is decided based upon information on the feature point extracted right before the shooting. The digital camera set forth in claim 8 further includes a storage device that stores at least any of a location of a feature portion extracted by the extraction device right before the shooting directive device directs to shoot or a size thereof, and a decision device that decides an extraction range for extracting by way of the extraction device based upon at least any of a location of the feature portion stored on the storage device or a size thereof, wherein the controller controls so as to extract only an extraction range decided by the decision device from image data photographed by the imaging device responsive to a shooting directive of the shooting directive device. Namely, by extracting the predetermined range only, not extracting the full screen after the shooting, the feature point can be instantly extracted.

The digital camera set forth in claim 9 further includes a counting device that counts a time elapsed after a shooting was directed by the shooting directive device, and a storage device that stores the image data on the storage medium when the counting device counts a predetermined time. Namely, unless there is a directive from a user, the shot image data is to be automatically stored on the memory card after the predetermined period of time has elapsed. The digital camera set forth in claim 10 further includes a reception device that receives a storage directive from a user, and a storage device that stores the image data on the storage medium when the reception device receives a storage directive from a user. Namely, the shot image data is stored on the memory card with the user's directive. The digital camera set forth in claim 11 further includes a reception device that receives a delete directive from a user and a controller that controls so as not to store the image data on the storage mediumwhen the reception device receives a delete directive from a user. Namely, with a delete directive, the image data is controlled so as not to be stored on the card. With this, the image judged to be of no use is not stored on the memory card.

A digital camera set forth in claim 12 includes an imaging device that photographs a subject image, an extraction device that extracts a feature portion of a subject from image data, a selecting device that selects at least any of a predetermined portion from a feature portion extracted by the extraction device or a subject corresponding to the predetermined feature portion, and a controller that controls so as to link image data photographed by the imaging device to data on the predetermined feature portion selected by the selecting device from the image data and store the image data linked to the data on a storage medium. Namely, only information on the feature point selected from a plurality of the extracted feature points is stored along with the image data. The digital camera set forth in claim 13, wherein data on the predetermined feature portion is at least one of location information on the feature portion, size information thereon, or identification information for distinguishing a subject corresponding to the feature portion from other subject.

The digital camera set forth in claim 14 further includes an AF device that computes a distance up to a subject within a predetermined AF area, and a setting device that sets a predetermined area including at least a part of a feature portion selected by the selecting device to the AF area. The subject corresponding to the selected feature point is set to the AF area.

The digital camera set forth in claim 15 further includes a display device that displays image data, a directive device that directs to play back image data stored on the storage medium, and a play-back device that cuts out a screen having a predetermined range including at least a part of a subject specified by data on the predetermined feature portion stored on the storage medium responsive to a directive of the directive device and plays back the screen in a predetermined location on the display device. Namely, when playing back the image data stored on the memory card, the area around the subject corresponding to the feature point stored on the memory card can be displayed together with the image data on the screen. The digital camera set forth in claim 16, wherein the play-back device further includes a zoom device that zooms in the predetermined range.

A digital camera set forth in claim 17 includes an imaging device that photographs a subject image, an AF device that computes a distance up to a subject within a predetermined AF area, and a controller that controls so as to link image data photographed by the imaging device to data on the AF area and store the image data linked to the data on a storage medium. Namely, information on the AF area can be stored together with the image data. The digital camera set forth in claim 18, wherein data on the AF area is at least any of location information on the AF area within the image data or size information thereon. The digital camera set forth in claim 19 further includes a display device that displays image data, a directive device that directs to play back image data stored on the storage medium, and a play-back device that cuts out a screen having a predetermined range including at least a part of a subject specified by data on the predetermined feature portion stored on the storage medium responsive to a directive of the directive device and plays back the screen in a predetermined location on the display device. With this, a focus status around the AF area within the reproduced image can be checked readily.

A digital camera set forth in claim 20 includes an extraction device that extracts a feature portion of a subject from image data, a classification device that classifies the image data into a predetermined group corresponding to a feature portion extracted by the extraction device, and a storing device that stores the image data on a storage medium in accordance with a result classified by the classification device. Namely, the extracted feature point can be stored by grouping the image data, so the search at playing back becomes ease-of-use.

The digital camera set forth in claim 21, wherein the storing device stores the image data onto an area that is on the storage medium having an area for housing a plurality of image data belonging to the same group collectively and that corresponds to a group classified by the classification device.

The digital camera set forth in claim 22 further includes a creation device that creates an area for housing image data classified by the classification device collectively on the storage medium. Namely, the folder corresponding to the extracted and classified feature point can be automatically created on the memory card. The digital camera set forth in claim 23 further includes a detection device that detects whether or not the storage medium has an area for housing image data classified by the classification device, wherein the creation device creates an area for housing image data of a group classified by the classification device on the storage medium when the detection device detects that the storage medium does not have an area for housing image data of a group classified by the classification.

The digital camera set forth in claim 24 further includes a judgment device that judges order of priority beforehand assigned to a feature portion extracted by the extraction device, wherein the classification device classifies the image data into a group corresponding to a feature portion that is judged to be a high priority by the judgment device when the extraction device extracts a plurality of different feature portions from the same image data. Namely, the image data is classified into a subject group with the high priority when the plurality of the feature points are detected.

The digital camera set forth in claim 25 further includes a detection device that detects whether or not the storage medium has an area for housing image data of a group classified by the classification device, and a creation device that creates an area for housing image data classified by the classification device collectively on the storage medium when the detection device detects that the storage medium does not have an area for housing image data of a group classified by the classification device. Namely, a new folder is created when the memory card does not have a folder corresponding to a subject with a high priority.

The digital camera set forth in claim 26 further includes a detection device that detects whether or not the storage medium has an area for housing image data of a group classified by the classification device, wherein the storing device stores the image data onto an area corresponding to a group of a feature portion having a next priority when the detection device detects that the storage medium does not have an area for housing image data of the group. Namely, the image data is stored onto a folder with a next high priority when there is no folder corresponding to a subject with a high priority.

The digital camera set forth in claim 27, wherein the storing device stores on a storage medium corresponding to a result classified by the classification device from a plurality of storage media.

A digital camera set forth in claim 28 includes an extraction device that extracts a feature portion of a subject from image data, a classification device that classifies the image data into a predetermined group corresponding to a feature portion extracted by the extraction device, and a creation device that creates an area for housing image data classified by the classification device collectively on a storage medium. Namely, a folder corresponding to the extracted and classified feature point is created on the memory card.

The digital camera set forth in claim 29 further includes a storing device that stores image data classified by the classification device onto an area being on a storage medium and being created by the creation device.

### BRIEF DESCRIPTION OF THE DRAWINGS

Fig. 1 is a block diagram showing a configuration of a digital camera according to the present invention.
Fig. 2 is a flow chart describing an action sequence of the digital camera according to the present invention.
Fig. 3 is a flow chart describing an action sequence of the digital camera according to the present invention.
Fig. 4 is a flow chart describing an action of checking a focus status of the digital camera according to the present invention.
Fig. 5 is a flow chart describing a storage action of the digital camera according to the present invention.
Fig. 6 is a flow chart describing other storage action of the digital camera according to the present invention.
Fig. 7 is a flow chart describing an action sequence at playing back of the digital camera according to the present invention.
Fig. 8 is a flow chart describing information on a feature point to be stored on a storage section of the digital camera according to the present invention.
Fig. 9 is a view describing a storage status of a folder and a data file within a memory card to be loaded into the digital camera of the present invention.
FIG.10 is a view describing a structure of a data file within a memory card to be loaded into the digital camera of the present invention.
Fig.11 is a view describing an example of an enlarged screen display on a display section of the present invention.
Fig.12 is a display view that overlays a message for confirming storage on a display section of the digital camera of the present invention.

### DETAILED DESCRIPTION OF THE PREFERRED EMBODIMENT

With reference to the accompanying drawings, embodiments of this invention will be described hereunder.

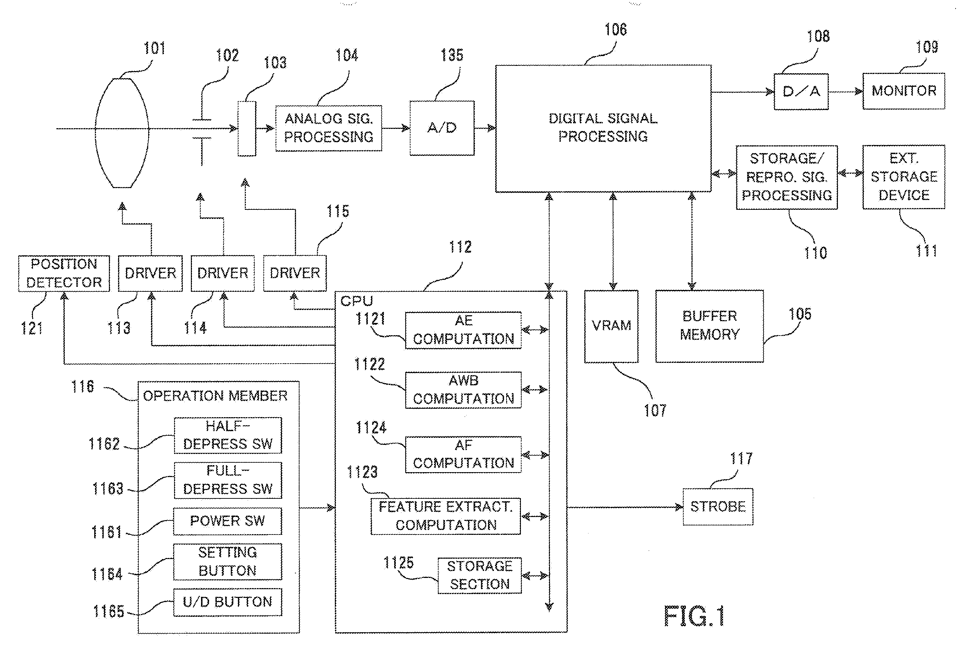

FIG. 1 is a block view explaining major functions about a digital camera of this invention. Image-taking lens 101 includes a zoom lens that continuously changes its focal length, and a focus lens that adjusts a focus point. These lenses are driven by driver 113. Herein, driver 113 has a zoom driver unit and its driver circuit for the zoom driver and a focus driver unit and its driver circuit for the focus driver, and these units and circuits are controlled by CPU 112. Image-taking lens 101 forms a subject image on an image-forming surface of imaging element 103. Imaging element 103 is a photoelectric imaging element that outputs an electric signal responsive to a light intensity of the subject image formed on the image-forming surface and a CCD-type or MOS-type solid state imaging element is used. Imaging element 103 is driven by driver 115 that controls timing of extracting a signal.

Diaphragm 102 is arranged between image-taking lens 101 and imaging element 103. Diaphragm 102 is driven by driver 114 that includes an aperture unit and its driving circuit for the aperture unit. An image signal from solid state imaging element 103 is input into analogue signal processing circuit 104 where correlation double sampling (CDS) and the like are processed. The image signal processed by analogue signal processing circuit 104 is converted into a digital signal from an analogue signal by A/D converter 135.

Various image processing such as an edge enhancement, a gamma correction, a white balance correction and so are performed on the A/D converted signal in digital signal processing circuit 106. Buffer memory 105 is a frame memory capable of storing data for a plurality of frames imaged by imaging element 103 and the A/D converted signal is temporarily stored on buffer memory 105. Digital signal processing circuit 106 reads the data stored on buffer memory 105 and implements each of the foregoing processing, and the data that was processed is stored again on buffer memory 105.

CPU 112 is connected to digital signal processing circuit 106 and drivers 113 through 115, and controls a sequence when a camera is put into action. AE computation section 1121 of CPU 112 computes an exposure based upon an image signal from the imaging element and AWB computation section 1122 thereof computes to set a parameter for a white balance. Feature point-extraction-computation unit 1123 of CPU 112 extracts feature points like a shape, position, size etc of a subject from image data in accordance with a predetermined algorithm. Storage section 1125 thereof stores a result of the extraction as needed and also various information on feature points extracted by feature point-extraction-computation unit 1123. An explanation about this information will be given later. As regards the feature point and its information, A user can add, modify or delete from storage section 1125.

An AF system of a digital camera in this embodiment employs a contrast method. Herein, an explanation about this contrast method will be given. There is a correlation between a degree of an out-of-focus of an image formed on imaging element 103 and its contrast, thereby a focus point being obtained by use of an image contrast becoming the largest amount when the image comes into focus. A size of the contrast can be evaluated by a size of a high frequency component of an image signal. Namely, AF computation section 1124 extracts a high frequency component of an image signal with a band pass filter (BPS) not shown herein and a value integrating this absolute value of the high frequency component is defined as a focus evaluation value, and an AF computation is implemented based upon the focus evaluation value. CPU 112 adjusts a focus lens position of image-taking lens 101 using a computation result of AF computation section 1124 and puts the lens into focus action.

In operation member 116 connected to CPU 116, there are provided power switch 1161 that turns on and off a camera power, half-depressing switch 1162 and full-depressing switch 1163 that couple with a release button, setting button 1164 that selects and sets any of various menus displayed on monitor 109 at a time of a picture taking, and up/down (hereinafter referred to as U/D) button 1165 that updates a reproduction image and the like. With setting button 1164, in order to give extracted feature point a name, various characters like an alphabet, a Chinese character (kanji) and Japanese characters are also selected and set by using U/D button 1165. In addition, U/D button 1165 is also used to select a desired person from a plurality of extracted persons and drive the zoom lens manually toward a telephoto side or a wide-angle side when shooting.

When subject brightness is low, flash 117 is fired. This flash is provided with a pre-flash function that fires a supplementary flash beforehand prior to a shooting in order to prevent a pupil of a person from being photographed in red when firing a flash or reduce a so-called red eye phenomenon when so fired. This pre-flash function is used to measure subject brightness in advance at dim brightness. Other than the information of the feature points as described before, information on a peak value of an evaluation value detected from a result of the AE computation and information on a position of the focus lens corresponding to the peak value and the like are stored on storage section 1125. The image data variously processed by digital signal processing circuit 106 is stored on external storage medium 111 like a memory card etc via record & reproduction signal processing circuit 110 after being temporarily stored on buffer memory 105. When image data is stored on storage medium 111, the data is usually compressed in a predetermined form, for example, JPEG format. Record & reproduction signal processing circuit 110 implements a data compression for storing image data on external storage medium 111 and a process for decompressing the compressed image data reproduced from external storage medium 111.

Monitor 109 is a liquid crystal display device (LCD) to display a photographed subject image and various setting menus when shooting or playing back. Herein, this monitor is also used to play back image data stored on external storage medium 111. When an image is displayed on monitor 109, image data stored on VRAM 107 that is a part of buffer memory 105 is read out and digital image data is converted to an analogue picture image signal by D/A converter 108. Then, the image is displayed on monitor 109 using this analogue picture image signal.

Herein, a relationship between buffer memory 105 and VRAM 107 when the feature point is extracted will be described. When image data used for a display purpose is played back on monitor 109, image data that is thinned out from image data for a still image to the image data used for a display purpose is continuously output from the imaging element at a specific cycle (for example, 30 frames per second). Predetermined processing is performed on this image data and the processed image data is continuously stored on VRAM 107 further thinning out data such that a number of pixels of the image data correspond to a vertical/lateral number of pixels of monitor 109. The data stored on VRAM 107 is displayed on monitor 109 as a display image via D/A converter 108. This image data stored on VRAM 107 is also used as data to extract the feature point. When the feature point is extracted, first, the image data stored on VRAM 107 is stored again on buffer memory 105 at a predetermined timing. Herein, only a predetermined range (for example, vertical/lateral 80 %) around a center portion of the image data stored on VRAM 107 is stored on buffer memory 105.

Like this, the reason why the image data is stored again on buffer memory 105 from VRAM 107 is as follows. If a processing power of CPU 112 were high, the feature point could be extracted at a rate of 30 f/sec., but, in many cases, the processing power of CPU employed in typical digital cameras on the market is actually not so high. Therefore, with storage of image data again on buffer memory 105 from VRAM 107, the feature point can be extracted at a rate matching a feature-point-extraction computation corresponding to the processing power of CPU 112. Even in this case, the image data used for a display on monitor 109 is surely output from VRAM 107 at a normal rate, so a rate of the display update does not become late. Anyway, AE and AF computations use image data that is output from imaging element 103 and is not thinned out yet for VRAM 107.

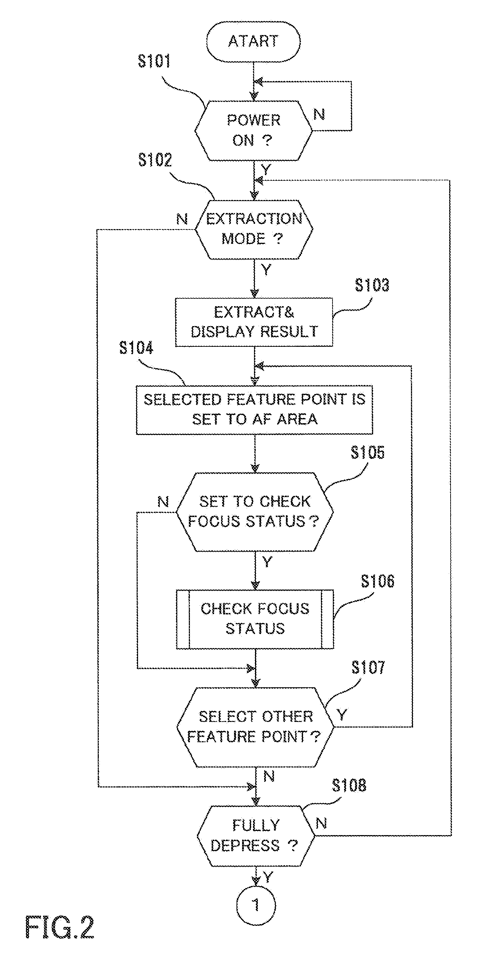

Therefore, with this digital camera having such the feature point-extraction function, it becomes possible to check out a focus status of a subject efficiently before and after shooting by use of this feature point-extraction function. Using flows shown in Figs.2 through 7, this will be described.

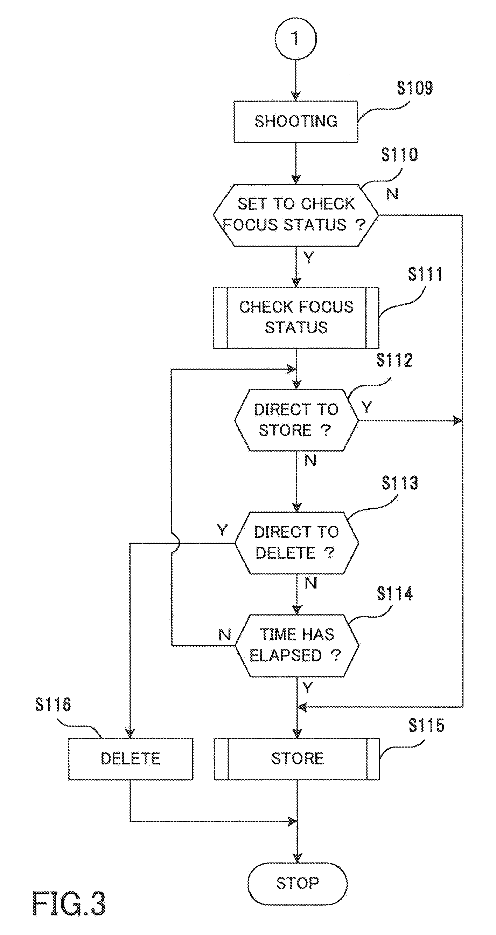

First of all, Figs.2 and 3 are flow views explaining how the focus status is checked out in relation to a shooting action. In step S101, when it is detected that a power of a digital camera is turned on, it is judged in step S102 whether or not an extraction mode for extracting the feature point is set. As one example of a method of setting this extraction mode, the extraction mode is set (not shown) by selecting this mode from various shooting modes displayed on LCD monitor 109 by way of setting button 1164. In step S102, when the extraction mode is not set, a flow proceeds to step S108.

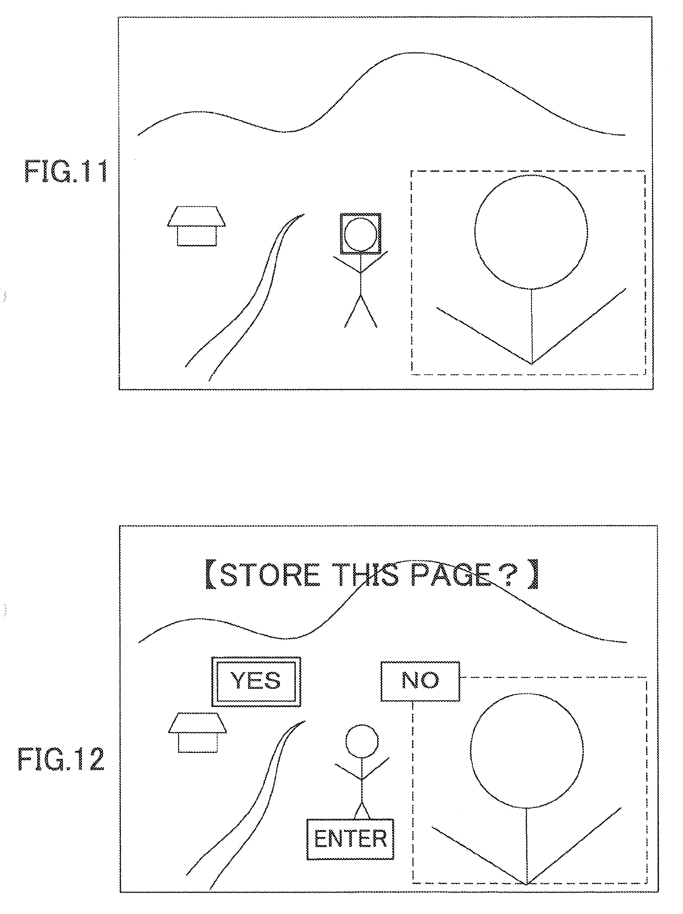

In step S102, when it is judged that the shooting mode is set to the extraction mode, a flow proceeds to step S103 where a feature point of the subject is extracted from an output of imaging element 13 at a predetermined timing and the subject identified by the extracted feature point is displayed on LCD monitor 109 along with a "through" image (or a motion image output from the imaging element just for viewing purposes, not storing). An example of an identification display is shown in Fig.11. A square displayed by a solid line enclosing a person's face at a center in Fig.11 represents that the face of this person is extracted. An inside of a broken line of Fig.11 is an enlarged display around the face of this person, but its detail will be given later.

In step S104, the extracted feature point and a predetermined area including the extracted feature point is set to an AF area. When the subject's face is zoomed up, its pupil is further set to the AF area. Moreover, when a plurality of feature points within the display screen are extracted, a largest feature point in terms of an area size is set to the AF area. Or, when the same feature point as the extracted feature point has been stored on storage section 1125 beforehand, the AF area is set up in accordance with information (for example, priority order information) about the feature point. Details of the feature-point information will be given later.

In step S105, it is judged whether or not a shooting mode is set to a mode for checking a focus on a subject within the AF area. Like the foregoing extraction mode settings, a method of setting this mode is to select a menu for checking a focus on the extracted subject from the setting menus of the shooting mode (not shown). This focus checking and the setting of the foregoing extraction mode or clearing thereof can be executed any time. When the focus is not checked, a flow proceeds to step S107 and when the focus is checked, a flow proceeds to step S106.

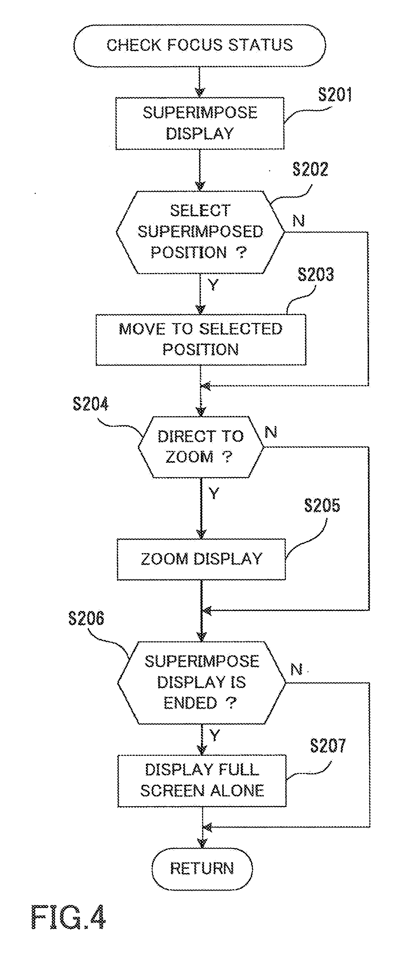

In step S106 where the focus is checked, as shown in Fig.11, a predetermined range including the AF area set in accordance with the extracted feature point is enlarged and is displayed at a portion on LCD monitor 109 by superimposing this range on all data on the screen. Details of a flow of this step S106 will be described later in Fig.4. In step S107, it is judged whether or not other feature point is selected as the AF area. This selection is made by use of U/D button 1165. When the other feature point is not selected, a flow proceeds to step S108 and when the other feature point is selected, a flow gets back to step S104 where the selected feature point is newly set up as an AF area. Up to here, half-depress SW 1162 may not be depressed.

In step S108, it is judged whether or not half-depress SW 1162 and full-depress SW 1163 are depressed. When full-depress SW 1163 is not depressed, a flow gets back to step S102 and when it is judged that full-depress SW 1163 is depressed, a flow proceeds to step S109 of Fig.3.

In step S109, the subject is exposed on imaging element 103 at a predetermined shutter speed and aperture value in accordance with a computation result of AE computation circuit 1121, image data output from imaging element 103 is stored on buffer memory 105. In step S110, it is judged whether or not a setting is to check the focus. A setting for checking the focus after shooting is implemented by selecting a menu for checking a focus after shooting by use of setting button 1164 beforehand before shooting like the setting of the foregoing extraction mode.

In step S110, when it is judged that the focus status is not checked, a flow proceeds to step S115 and when it is judged that the setting is to check the focus status, a flow proceeds to step S111. Details of checking the focus status in step S111 will be given in Fig.4 like the action of checking the focus status in step S106. A display at this moment is enlarged and displayed within the square represented by the broken line as shown in Fig.11 like the display of checking the focus status before shooting. A range of the enlarged display is a predetermined range including the AF area of which its position and size were stored on storage section 1125 right before full-depress SW 1163 was depressed.

Also, after full-depress SW 1163 is depressed and a feature point is extracted again from shot image data, a subject corresponding to the extracted feature point may be such that its enlarged display is implemented. In this case, the feature point is not newly extracted from the shot overall image screen, but only from the predetermined range including the AF area set up before shooting. With this, a time needed to extract is shortened. By extracting the subject from the image data after shooting as described, a part of a main subject can be displayed by enlarging it without fail even when the main subject moves.

In step S112, it is checked whether or not storage is directed. An example of a method of directing storage with respect to the screen of checking the focus status will be described referring to Fig.12. Fig.12 is a view showing a case where a storage directive menu is superimposed in Fig.11 explaining the checking of the focus status. When full-depress SW 1163 is depressed, as shown in Fig.12, LCD monitor 109 displays that a menu of selecting the storage directive is superimposed further on a screen where an enlarged screen around the AF area has been superimposed on the shot overall image screen. A photographer selects any of Yes or No by use of U/D button 1165 from this screen. When Yes is selected, a flow proceeds to step S115 and when any of Yes or No is not selected, a flow proceeds to step S113. In step S113, it is checked whether or not No is selected and when No is selected, a flow proceeds to step S116 where image data stored on buffer memory 105 is deleted. As one example of a method of this deleting, the image data stored on buffer memory 105 is not stored on memory card 111, but it can be achieved by letting image data to be shot next time capable of being overwritten on buffer memory 105.

When No is not selected in step S113, a flow proceeds to step S114 where it is judged whether or not a certain time has elapsed after shooting was ended. When the certain time has not elapsed, a flow gets back to step S112 for standing by the storage directive. When the certain time has elapsed, a flow proceeds to step S115 where storage is implemented on a memory card. Like this, a default setting is configured so as to select Yes enclosed by two boxes as shown in Fig.12 and once image data is shot, the image data is kept stored on memory card 111 until and before a deleting is directed from the photographer. Herein, the certain time may be a minute or so and may be changed in accordance with the photographer's intention.

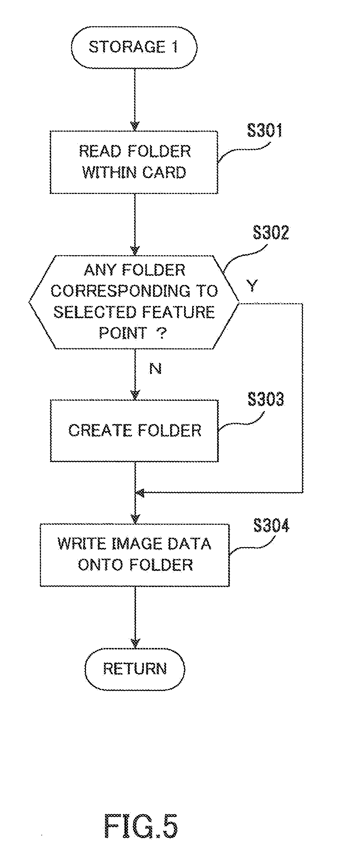

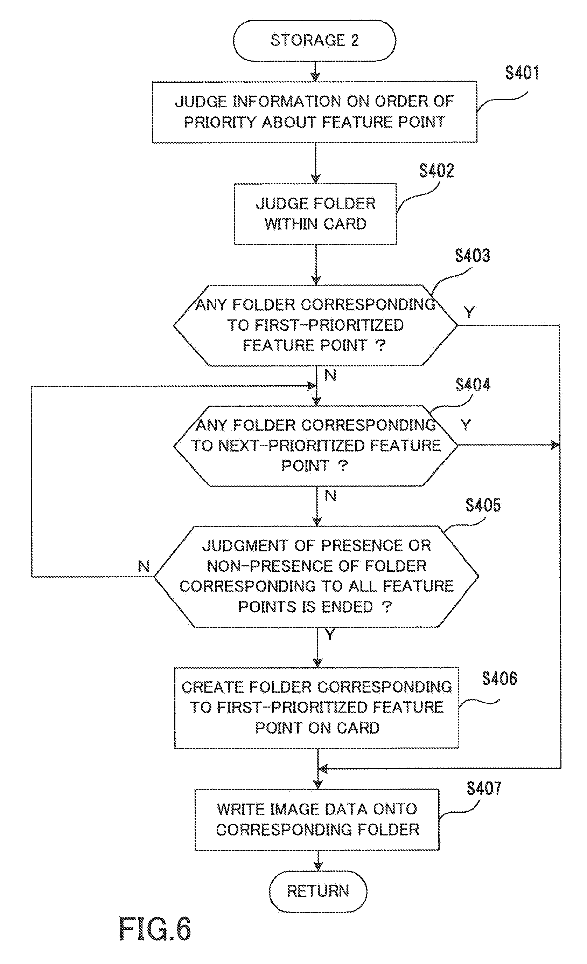

After storage processing such as the white balance, gamma or compression processing is performed, in step S115, the image data is stored onto a predetermined folder of memory card 111. With respect to the folder when storing, details thereof will be given using Fig.5 or 6. When the storage or deletion is ended, a series of shooting action is ended.

Next, with reference to the flow of Fig.4, the checking of the focus status that has been described so far will be explained in detail. In step S201, the screen enlarging the predetermined area around the AF area is superimposed on the screen covering a full angle of view of the image data stored on buffer memory 105 on LCD monitor 109. One example of this display is shown in Fig.11. Fig.11 shows that a face portion of the person in the box at the center of the screen is the extracted subject. Herein, the face portion of the extracted person is set to the AF area and the enlargement display of the predetermined area including the AF area is positioned in the box of a broken line at a lower right of the screen. As a position of displaying this superimposition, it is not limited to such the lower right, but any of an upper right, lower left, upper left or center of the screen can be selected by use of setting button 1164 or U/D button 1165.

The enlargement display is electrically implemented and a zoom magnification for an initial display is set to an order of 4-5 times as a default. Regarding this zoom operation, setting button 1164 or U/D button 1165 is used. When displaying image data on LCD monitor 109, the image data of imaging element 103 is generally thinned out, but a non thinned-out image, namely, the image data of imaging element 103 can be enlarged up to the same resolution of LCD. For example, let assume that pixels of LCD monitor 109 are 100K and pixels of imaging element 103 1M, the data is usually displayed on LCD monitor 109 with one tenth of resolution, but it can be zoomed in up to a maximum 10 times thereof.

In step S202, it is judged whether or not a superimposed display position of a small screen within the screen is selected. When the position is not selected, a flow proceeds to step S204 and when the position is selected, a flow proceeds to step S203 where the enlarged small screen is moved to the selectedposition. In step S204, it is judgedwhether or not a zoom is directed. When the zoom is not directed, a flow proceeds to step S206 and when the zoom is directed, the electric zoom is zoomed in up to the maximum zoom magnification as long as the zoom is directed.

In step S206, it is judged whether or not it is set so as to terminate the superimposing display. This termination can be achieved by setting the clearance in an opposite way to the setting of checking the focus status in step S105. When it is set so as not to terminate the superimposing display, this sequence is ended in a state of the superimposing display as it is and when it is set so as to terminate the superimposing display, the superimposing display is terminated in step S207 and this sequence is ended.

Referring to Figs.5 and 6, an explanation about a method of selecting a folder when storing in step S115 of Fig.3 will be given in detail. So far, shot image data has been stored onto a folder having a name that is automatically created by a digital camera regardless of content of a shot image and based upon a shooting day/time. However, in a case where there are lots of images for reproduction at a time of playing back afterward, it would be much annoying to search for a desired image later if the images have been classified by the day/time alone and kept in such the way. In particular, when there are many image data of portraits shot around the same time, it would be hard to find out image data of a desired person. In order to solve this problem, with this embodiment, each of shot image data is configured to be automatically stored onto a folder corresponding to a main subject among the shot image data.

Fig.5 is a flow view describing that image data is stored onto each corresponding folder for each main subject. In step S301 of Fig.5, first, a folder name within memory card 111 inserted into a digital camera is read. In step S302, it is judged whether or not there is a folder corresponding to a selected feature point on memory card 111. When there is already the corresponding folder on memory card 111, a flow proceeds to step S304 and when there is not the folder, a flow proceeds to step S303. In step S303, a folder corresponding to the selected feature point is newly created on memory card 111 and then a flow proceeds to step S304. In step S304, each image data is stored onto the corresponding folder and this step is ended.

Even when a plurality of feature points are extracted from image data, only the selected feature point is mattered as described herein, and when there is no folder corresponding to the selected feature point, a folder may be newly created.

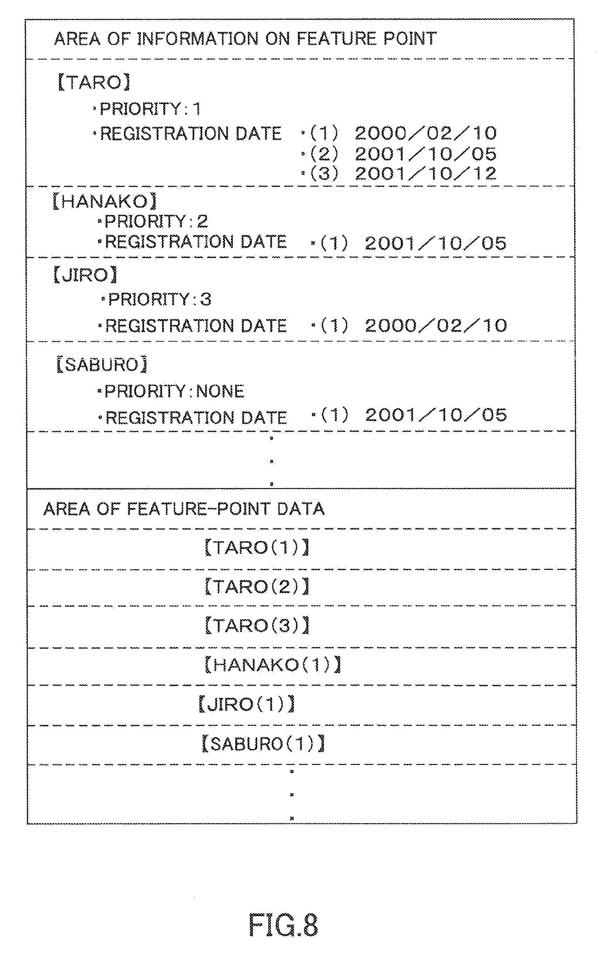

Fig.6 is a flow view describing another embodiment in which a plurality of feature points are extracted from image data. Herein, a method of storing image data onto a predetermined folder in accordance with a priority order given to the feature points will be described. In this case, first, a user of a digital camera has stored information on a feature point corresponding to a subject beforehand. Fig.8 shows one example of how a feature point and feature-point information corresponding to the feature point are stored on storage section 1125.

In Fig.8, feature points named respectively like TARO, HANAKO, JIRO and SABURO as the feature point are registered with order of priority set beforehand. As feature-point information on TARO, there is order of priority used for selecting the AF area as described before, which is set to a first order of priority. With this setting, for example, when both of TARO and JIRO are extracted within a shot image screen at the same time, an area including TARO is set to the AF area having priority over JIRO. A setting of this order of priority is also to be implemented beforehand by use of setting button 1164 and U/D button 1165. This order of priority can be changed any time. Like SABURO, at first, there may be nothing set.

As the feature-point information on TARO, next, a date on which the feature point of TARO was registered is recorded as a registration date. Herein, the registration date indicated by (1) is a day when TARO was registered for the first time, and (2) and (3) represent dates on which, with a condition different from the one of (1), for example, other feature points of TARO shot when looking aside, looking backward, wearing of glasses and the like were additionally registered. Like this, by making plural registrations of the feature points as the same person depending on a presence or a non-presence of glasses or a beard/mustache, the accuracy in identification of a person is enhanced with respect to the extracted feature points. As regards these feature points, contents of the registration thereof are displayed on LCD monitor 109, and also they can be added or deleted freely. Rather than the order of priority and the registration date, a short comment, processing (settings of the white balance, the edge enhancement correction and the like) at storage or playing back to be effective when the feature point is detected, a distance up to the feature point and the like may be stored, too.

Real data of the feature point set so as to be registered in such the way is registered one by one in a feature-point data area like TARO (1), HANAKO (1). Herein, the real data is data that formats a width of eyes, a relative position relationship between the eyes and a nose, a face shape and the like out of the extracted feature points into a predetermined size.

A reduced image at storage of the extracted real subject rather than the foregoing feature-point information and feature-point data may be stored on storage section 1125. With this storage, information on a subject can be added or deleted as the subject is viewed on LCD monitor 109.

In step S401 of Fig.6, information on order of priority corresponding to the extracted feature point from the feature-point information stored on storage section 1125 is checked. In step S402, the folder created in memory card 111 is read. In step S403, a first priority is judged from the order of the priority judged in step S401. When there is the corresponding folder, a flow proceeds to step S407. When there is not the corresponding folder, a flow proceeds to step S404 where a presence of a folder corresponding to the feature point of a second priority is judged. When there is the folder, a flow proceeds to step S407 and when there is not the folder, a flow proceeds to step S405.

In step S405, it is judged whether or not a judgment about the presence or the non-presence of folders with respect to all the extracted feature points is ended. When the judgment is not ended, a flow gets back to step S404 and when the judgment is ended, a flow proceeds to step S406. There is n not a folder on memory card 111 corresponding to all the extracted feature points, so a folder corresponding to a feature point substantially equal to a first order of priority is created from the extracted feature points in step S406 and a flow proceeds to step S407. In step S407, image data is written into the folder corresponding to the extracted feature point and then a storage step is ended.

In the description of Fig.6, when there is not a folder corresponding to the first order of priority, a folder corresponding to a next order of priority is looked for, but as described in Fig.5, a folder corresponding to the first order of priority may be created instantly. Moreover, when the AF area is manually set, as a subject selected as a subject in the AF area is not always a feature point with the first order of priority, a feature point corresponding to the subject in the AF area may be the feature point with the first order of priority.

When a plurality of feature points are extracted, the same image data may be stored respectively on folders corresponding to all the extracted feature points. In this case, when there is not a folder corresponding to memory card 111, it is a matter of course that a folder is newly created. But, when image data is a group photo, as the number of folders greatly increases, it is preferable that the maximum number of folders be predetermined.

On the other hand, such a method of storing the same image data respectively on the corresponding folders is not preferable to a capacity limited storage medium like memory card 111. A storage method of avoiding this will be described. First, image data is stored on a particular single folder alone and at the same time, information on a name of other folder desiring to store this image data is stored, too. Also, information on a name of the particular single folder storing the image data is stored on the other folder, too. With such the way, storage of the name of the folder alone enables to prevent the storage capacity from being unnecessarily reduced. When the image data is stored on memory card 111 in such the way, it is likely that the information on a name of a folder stored onto each of folders becomes useless if the image data is moved to another memory with a large capacity from memory card 111. In order to avoid this, when moving the image data to another memory with a large capacity from memory card 111, the same image data may be stored for each holder based upon the stored information on a name of a folder.

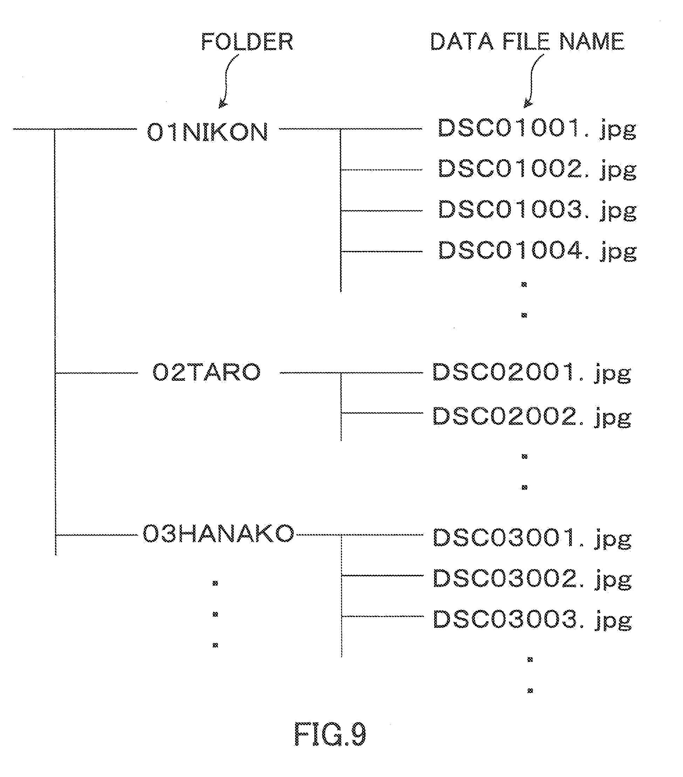

Fig.9 shows a name written into memory card 111 and a file name of image data stored thereon by a tree structure. In Fig.9, a folder with a name of 01NIKON is a folder to store image data shot by not setting to the extraction mode or image data of which the feature point is not extracted even if the image data is shot in the extraction mode. Also, image data from which the feature point is extracted solely and of which a subject alone is shot without a name is stored on this folder, too. Of course, a folder to store only the image data of the subject having no name may be separately created, and the image data thereof may be stored on this folder. At this moment, a name distinguishable from other folders and image data files, such as a folder name 04NANASHI, file name of image data DSC04001 and so is given.

A folder of 02TARO or 03HANAKO in Fig.9 is a folder that stores image data shooting a person of TARO or HANAKO respectively in a first order of priority.

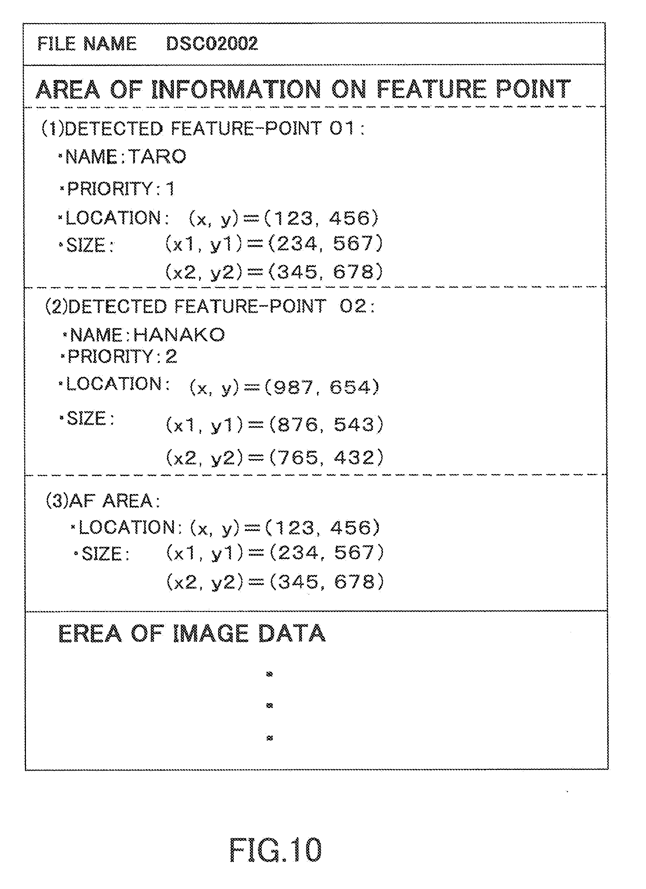

Fig.10 shows a file structure of image data having a name of DSC02002. An image data file consists of an image data area where real image data output from the imaging element is stored, and a feature-point information area where information on the feature point extracted from the image data is stored. Information on an order of priority, a coordinate of an extracting location, a size of the feature point with respect to TARO and HANAKO extracted from the image data, and the AF area at a time of shooting this image data is stored in the feature-point information area. As the information on the size of the feature point, coordinates at an upper left and a lower right of a rectangle including the extracted feature point are stored therein. As the information on the AF area, the coordinates at the upper left and the lower right are stored therein and in this Fig.10, the same information as the one on the location coordinate and size of TARO with the first order of priority are stored therein.

In Fig.10, the information on the all the extracted feature points and the extracted AF area is stored with the image data. By checking this stored information on the feature points, it becomes convenient to search for image data of a particular person being shot from each of the image data stored onto a plurality of folders. Also, it is a matter of course that the information on the feature point with the first order of priority (in this case, it is TARO) alone may be stored with the image data. Similarly, the information on the AF area alone may be stored with the image data. Needless to say, both of the information on the feature point with the first order of priority and the AF area may be stored with the image data.

So far, the case where only one piece of memory card 111 is loaded into the digital camera has been described. But, these days, there are various types of memory card 111 with not only a different storage capacity, but also a different exterior shape and driver method in the marketplace. Thus, it is necessary to provide the digital camera with a plurality of insertion slots for memory card 111 such that the plurality of various types of memory card 111 become usable. If the digital camera is provided with the plurality of insertion slots, memory card 111 may be changed in accordance with a classification of the image data as described before. When storing on each of memory card 111, it is a matter of course that a folder is to be created in accordance with the classification thereof.

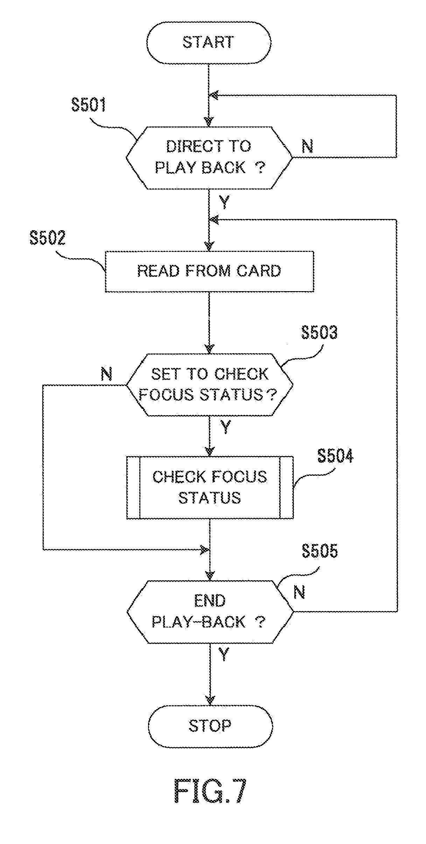

A checking of a focus status of a reproduction image will be described using Fig.7. In step S501, it is judged whether or not the action mode of the digital camera is set to a play-back mode. When setting this mode, setting button 1164 is used in the same way as in the other settings. When it is judged that the play-back mode is set, in step S502, stored image data is read out from memory card 111. In step S503, it is judged whether or not the camera action mode is set to a setting of checking out a focus status. When the mode is set to the setting of checking out a focus status, a flow proceeds to step S504. The action of the checking of a focus status in step S504 is the same as in step S106 of Fig.2. But, it is not necessary to take a trouble to extract the feature point from the image data at playing back and the information on the feature point with the first order of priority or the information on the AF area stored with the image data described in Fig.10 is judged, and the small screen used for checking the focus status can be superimposed instantly. Also, the zoom-in can be implemented by way of the electric zoom.

After the check of the focus status is ended, a flow proceeds to step S505 where it is judged whether or not the play-back mode is ended. When it is judged that the play-back mode is ended, this sequence is ended and when it is judged that the play-back mode is on, a flow gets back to step S502 where the play-back of the image is kept on corresponding to an instruction of the photographer.

## Claims

1. A digital camera comprising:
an extraction device that extracts a feature portion of a subject from image data;
a classification device that classifies the image data into a predetermined group corresponding to a feature portion extracted by the extraction device; and
a storing device that stores the image data on a storage medium in accordance with a result classified by the classification device.

2. The digital camera set forth in claim 1, wherein the storing device stores the image data onto an area that is on the storage medium having an area for housing a plurality of image data belonging to the same group collectively and that corresponds to a group classified by the classification device.

3. The digital camera set forth in claim 1 further comprising:
a creation device that creates an area for housing image data classified by the classification device collectively on the storage medium.

4. The digital camera set forth in claim 3 further comprising:
a detection device that detects whether or not the storage medium has an area for housing image data classified by the classification device, wherein the creation device creates an area for housing image data of a group classified by the classification device on the storage medium when the detection device detects that the storage medium does not have an area for housing image data of a group classified by the classification device.

5. The digital camera set forth in claim 1 further comprising:
a judgment device that judges order of priority beforehand assigned to a feature portion extracted by the extraction device, wherein the classification device classifies the image data into a group corresponding to a feature portion that is judged to be a high priority by the judgment device when the extraction device extracts a plurality of different feature portions from the same image data.

6. The digital camera set forth in claim 5 further comprising:
a detection device that detects whether or not the storage medium has an area for housing image data of a group classified by the classification device; and
a creation device that creates an area for housing image data classified by the classification device collectively on the storage medium when the detection device detects that the storage medium does not have an area for housing image data of a group classified by the classification device.

7. The digital camera set forth in claim 5 further comprising:
a detection device that detects whether or not the storage medium has an area for housing image data of a group classified by the classification device, wherein the storing device stores the image data onto an area corresponding to a group of a feature portion having a next priority when the detection device detects that the storage medium does not have an area for housing image data of the group.

8. The digital camera set forth in claim 1, wherein the storing device stores on a storage medium corresponding to a result classified by the classification device from a plurality of storage media.

9. A digital camera comprising;
an extraction device that extracts a feature portion of a subject from image data;
a classification device that classifies the image data into a predetermined group corresponding to a feature portion extracted by the extraction device; and
a creation device that creates an area for housing image data classified by the classification device collectively on a storage medium.

10. The digital camera set forth in claim 9 further comprising:
a storing device that stores image data classified by the classification device onto an area being on the storage medium and being created by the creation device.

11. A digital camera comprising:
a display device that displays image data;
an extraction device that extracts a feature portion of a subject from image data; and
a controller that controls so as to cut out a screen of a predetermined range including at least a part of a subject corresponding to a feature portion extracted by the extraction device from the image data and display a screen thereof in a predetermined location on the display device.

12. A digital camera comprising:
an imaging device that photographs a subject image;
a display device that displays image data;
an extraction device that extracts a feature portion of a subject from image data;
a shooting directive device that directs the imaging device to start a shooting in order to store data of the subject image on a storage medium; and
a controller that controls so as to cut out a screen having a predetermined range including at least a part of a subject corresponding to a feature portion extracted by the extraction device from the image data photographed by the imaging device responsive to a shooting directive of the shooting directive device and display a cut-out screen in a predetermined location on the display.

13. A digital camera comprising:
an imaging device that photographs a subject image;
an extraction device that extracts a feature portion of a subject from image data;
a selecting device that selects at least any of a predetermined portion from a feature portion extracted by the extraction device or a subject corresponding to the predetermined feature portion; and
a controller that controls so as to link image data photographed by the imaging device to data on the predetermined feature portion selected by the selecting device within the image data and store the image data linked to the data on a storage medium.

14. A digital camera comprising:
an imaging device that photographs a subject image;
an AF device that computes a distance up to a subject within a predetermined AF area; and
a controller that controls so as to link image data photographed by the imaging device to data on the AF area and store the image data linked to the data on a storage medium.
